# EUROPEAN PATENT APPLICATION

(11) **EP 1 637 478 A1**
(43) Date of publication of application: **22.03.2006**
(21) Application number: 04734909.7
(22) Date of filing: 26.05.2004
(51) Int. Cl.: B65G 1/137

(54) **PRODUCT INVENTORY MANAGEMENT SYSTEM**

(30) Priority: 27.05.2003 JP 2003148928
(71) Applicant: HONDA MOTOR CO., Ltd., Tokyo 107-8556 (JP)
(72) Inventor: AJIKI, Teiji, c/o Honda Motor Co., Ltd., Tokyo 1078556 (JP); ARAKI, Daiji, c/o Honda Motor Co., Ltd., Tokyo 1078556 (JP); SHIMA, Kouji, c/o Honda Motor Co., Ltd., Tokyo 1078556 (JP)
(74) Representative: Piésold, Alexander James
(86) International application number: PCT/JP2004/007537
(87) International publication number: WO 2004/108568

(57) **Abstract**

A product inventory management system is provided that includes a receiving management section (11) for carrying out receiving management of a product, an inventory section (12) for stocking the product, a shipping management section (13) for carrying out shipping management of the product, and allocation determination means (14) for determining a product delivery destination, wherein the allocation determination means (14) determines, based on the product inventory quantity in the inventory section (12), a production-to-order plan where the delivery destination has already been determined, a production-without-orders plan where the delivery destination has not yet been determined, a designated delivery date for the product, whether the product received by the receiving management section (11) is moved to the inventory section (12) or to the shipping management section (13), and whether or not the product stored in the inventory section (12) is moved to the shipping management section (13). This can minimize the cost required for movement of the product or for putting it into and out of the inventory section while preventing the period for which the product is stored in the inventory section from exceeding a shipping-allowed period.

## Description

### FIELD OF THE INVENTION

The present invention relates to a product inventory management system that includes a receiving management section for carrying out receiving management of products coming from a factory production line, an inventory section for stocking the products, and a shipping management section for carrying out shipping management of the products.

### BACKGROUND ART

With regard to an arrival/shipping management system in which an inventory section for temporarily stocking products is disposed between an arrival management section and a shipping management section, an arrangement in which actual arrival data are looked up based on shipping request data, and when there is an actual record of a product on the shipping request having arrived at the arrival management section, the product is moved directly from the arrival management section to the shipping management section without going through the inventory section, thus minimizing the time taken up to the shipping management and minimizing the inventory quantity of the inventory section, is known from the patent publication below.

### [Patent Publication]

Japanese Patent Application Laid-open No. 8-258919

Among the products, if the period of time for which they are stored in the inventory section exceeds a predetermined period they cannot be shipped unless they receive a reinspection and the quality is checked, but in the above-mentioned arrangement since the period of time for which the products are stored in the inventory section is not managed so as not to exceed a shipping-allowed period, there is a possibility that the product storage period might exceed the shipping-allowed period, and the product cannot be shipped.

### DISCLOSURE OF THE INVENTION

The present invention has been accomplished under the above-mentioned circumstances, and it is an object thereof to minimize the cost required for moving a product or putting the product into and out of an inventory section, while preventing the period of time for which the product is stored in the inventory section from exceeding a shipping-allowed period.

In order to attain the above object, in accordance with a first aspect of the present invention, there is provided a product inventory management system comprising: a receiving management section for carrying out receiving management of a product coming from a factory production line; an inventory section for stocking the product; and a shipping management section for carrying out shipping management of the product, characterized in that the system further comprises: inventory information storage means for storing inventory information including a product inventory quantity in the inventory section; and allocation determination means for determining, based on the product inventory quantity stored in the inventory information storage means, whether a product received by the receiving management section is moved to the inventory section or the shipping management section.

In accordance with this arrangement, since it is determined, based on the product inventory quantity of the inventory section, whether a product coming from a factory production line to the receiving management section is moved to the inventory section or to the shipping management section, when the product inventory quantity in the inventory section is small and there is little possibility that the shipping-allowed period of the product might have expired, a product received by the receiving management section is moved directly to the shipping management section without going through the inventory section, and the cost required for moving the product or putting it into and out of the inventory section can thereby be cut.

In accordance with a second aspect of the present invention, in addition to the first aspect, the system further comprises: production plan storage means for storing a production plan including a production-to-order plan where the delivery destination has already been determined and a production-without-orders plan where the delivery destination has not yet been determined; and designated delivery date storage means for storing a designated product delivery date; the allocation determination means determining, based on the inventory quantity, the production plan, and the designated delivery date, whether a product received by the receiving management section is moved to the inventory section or to the shipping management section and whether or not a product stored in the inventory section is moved to the shipping management section.

In accordance with this arrangement, since it is determined, based on the product inventory quantity of the inventory section, the production plan for the product, and the designated delivery date for the product, whether a product received by the receiving management section is moved to the inventory section or to the shipping management section, and whether or not a product stored in the inventory section is moved to the shipping management section, the cost required for moving the product or putting it into and out of the inventory section can thereby efficiently be cut while satisfying the customer by delivering the product by the designated delivery date and avoiding expiry of the shipping-allowed period of the product.

In accordance with a third aspect of the present invention, in addition to the second aspect, the system further comprises: periodic sales volume storage means for storing the sales volume of the product over a period of time; basic inventory period calculation means for calculating, based on the inventory quantity and the sales volume, a basic inventory period for which the product is predicted to be stocked; normal inventory period calculation means for calculating a normal inventory period by subtracting the basic inventory period from a preset predetermined period; and inventory management means for managing the product moved from the receiving management section to the inventory section as normal inventory during the normal inventory period, and managing the product as managed inventory after the normal inventory period has elapsed.

In accordance with this arrangement, since inventory in the inventory section is managed as normal inventory during the normal inventory period and managed as managed inventory after the normal inventory period has elapsed, it is possible to prevent the occurrence of a situation in which inventory has not been shipped even though the shipping-allowed period has passed. In particular, since the normal inventory period is calculated from the product inventory quantity stored in the inventory section, the product sales volume for each period, and the preset predetermined period, it is possible to discriminate between normal inventory and managed inventory with good accuracy.

In accordance with a fourth aspect of the present invention, in addition to the third aspect, if there is managed inventory, the allocation determination means directs the managed inventory to be moved to the shipping management section regardless of whether or not there is a production-without-orders plan and regardless of whether or not there is normal inventory, if there is no managed inventory and there is a production-without-orders plan for the product that will be completed prior to the designated delivery date, the allocation determination means directs the completed product to be moved to the shipping management section by designating the production plan for the product as the production-to-order plan, and if there is no production-without-orders plan for the product that will be completed prior to the designated delivery date, the allocation determination means directs the normal inventory to be moved to the shipping management section.

In accordance with this arrangement, since, when there is managed inventory, the managed inventory is moved to the shipping management section regardless of whether or not there is a production-without-orders plan and regardless of whether or not there is normal inventory, by preferentially moving to the shipping management section managed inventory, which has been stored in the inventory section for a long period and whose shipping-allowed period is close to expiring, it is possible to reliably prevent the occurrence of a situation in which inventory has not been shipped even though the shipping-allowed period has passed. Furthermore, if there is no managed inventory and there is a production-without-orders plan for a product that will be completed before the designated delivery date, the production plan for the product is then changed to a production-to-order plan and the completed product is moved to the shipping management section, and it is therefore possible to prevent the occurrence of inventory whose shipping-allowed period has expired and minimize operations of moving the product to the inventory section and carrying out loading and unloading, thus cutting the cost. Furthermore, if there is no production-without-orders plan for a product that will be completed before the designated delivery date, normal inventory is then moved to the shipping management section, and it is therefore possible to ship the product to a customer while meeting the designated delivery date.

### BRIEF DESCRIPTION OF THE DRAWINGS

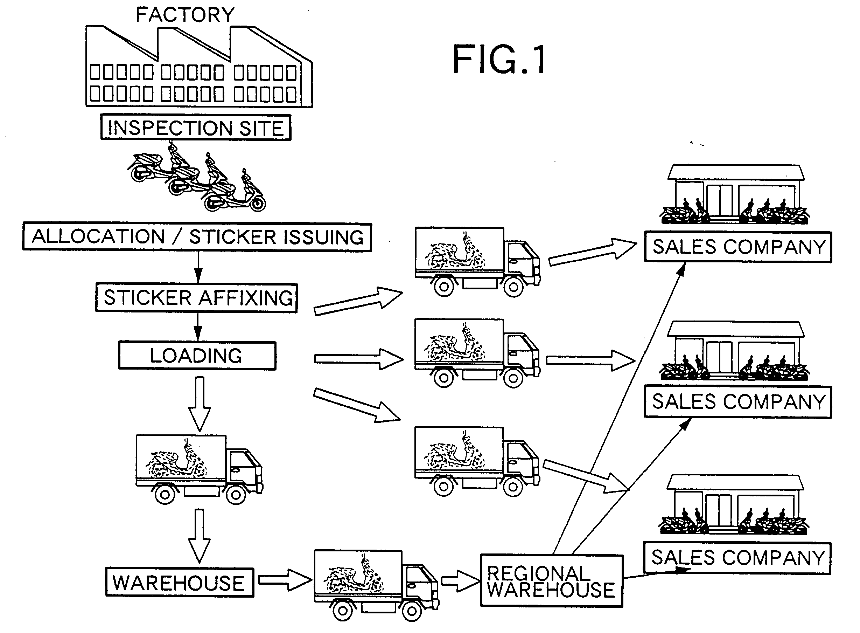

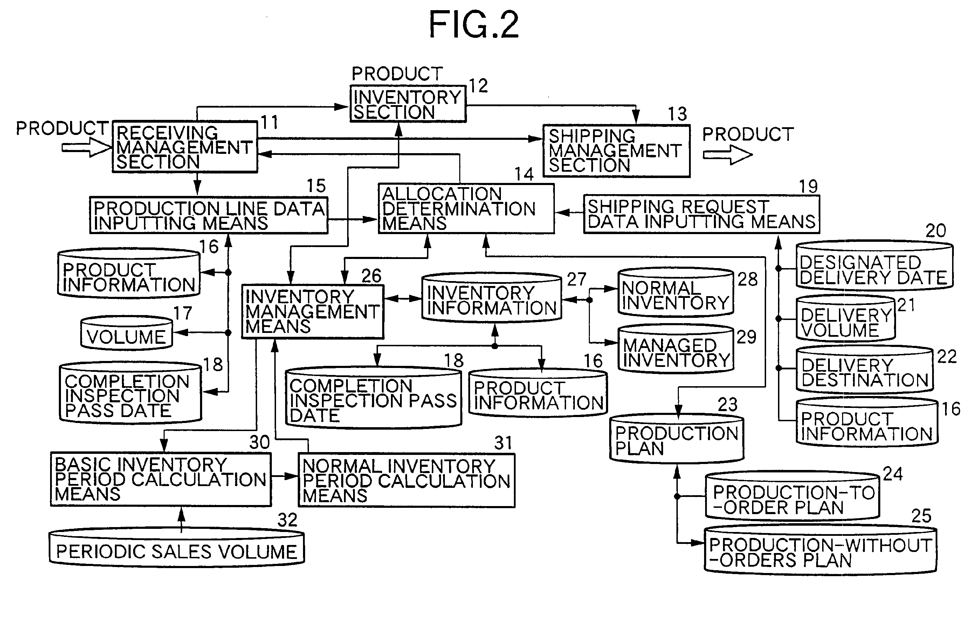

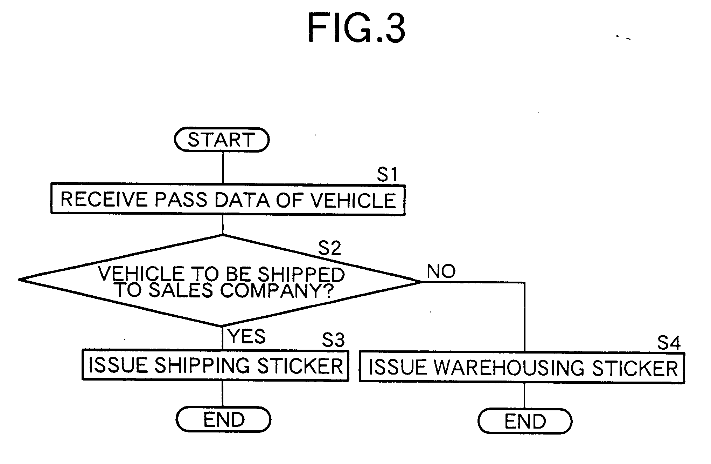

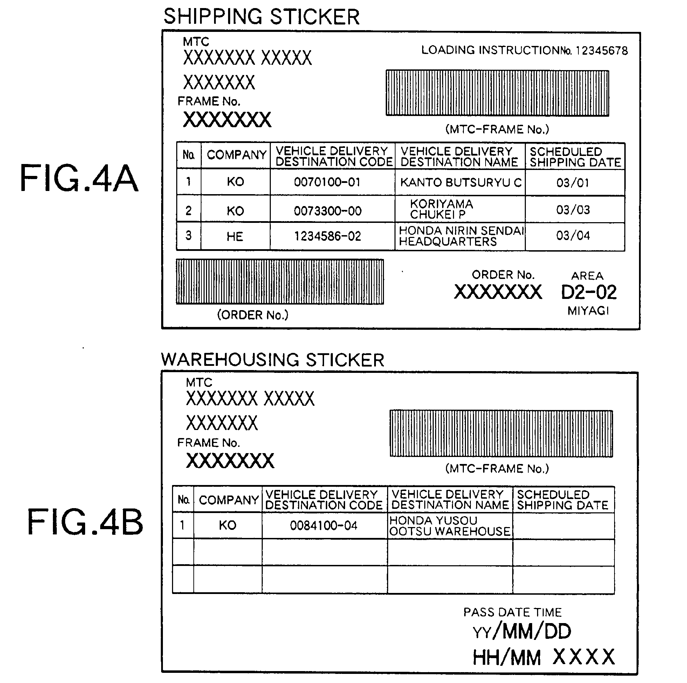

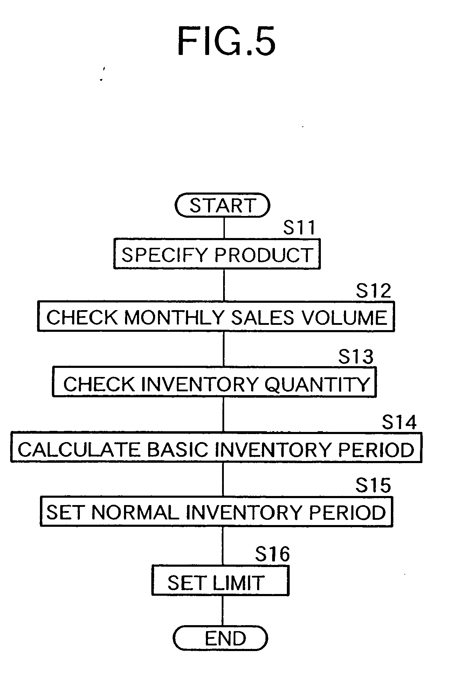

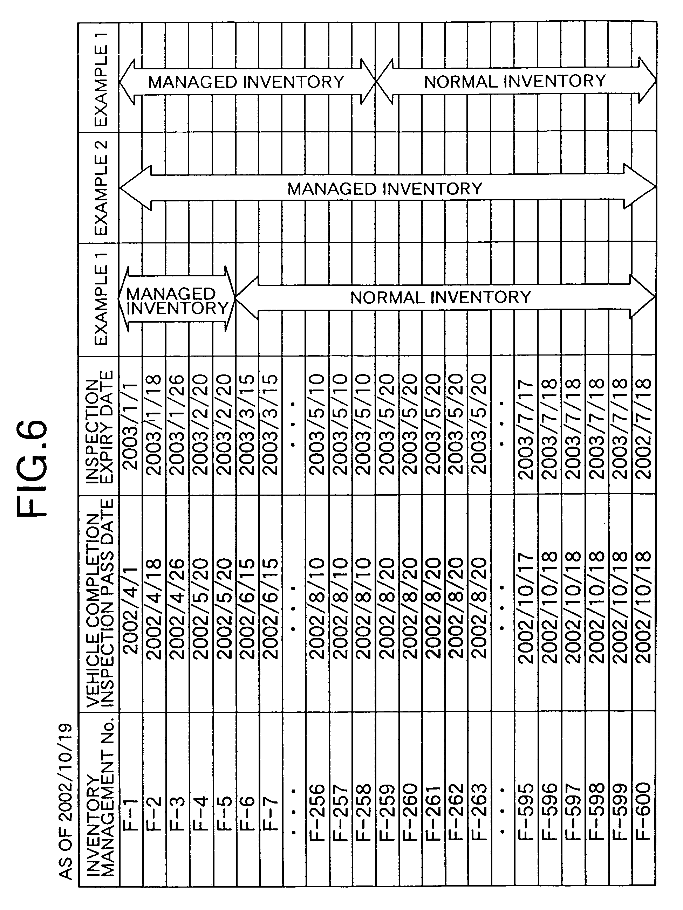

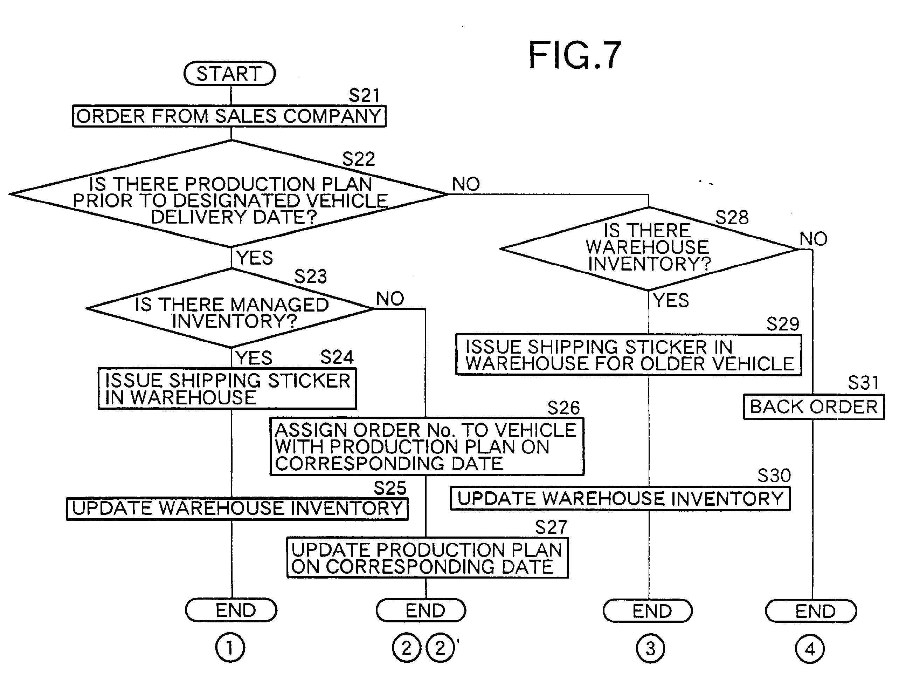

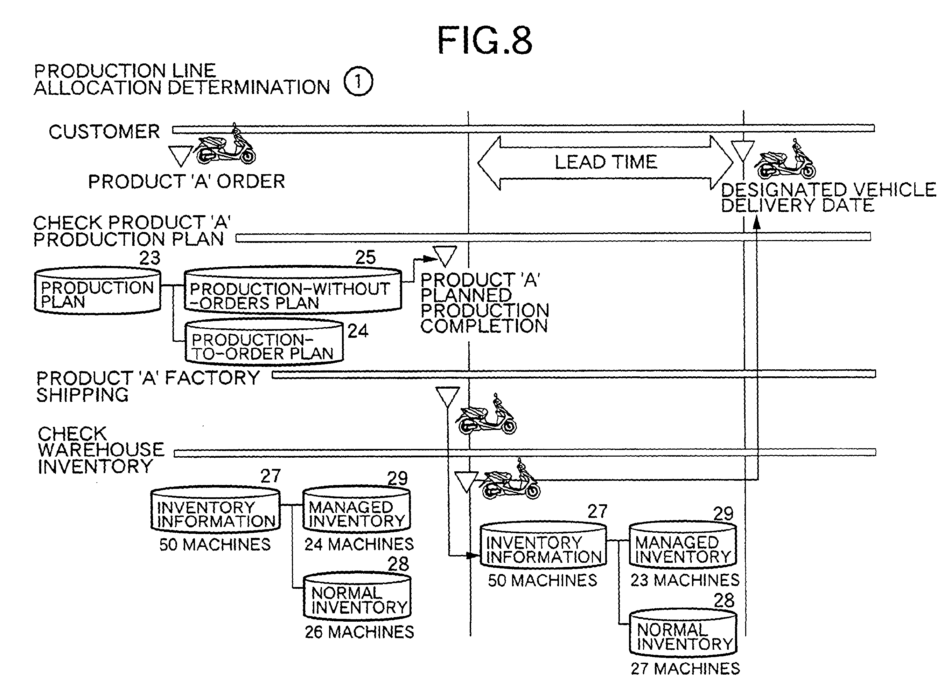

FIG. 1 to FIG. 12 show one embodiment of the present invention; FIG. 1 is a diagram showing routes via which products are moved from a factory to sales companies, FIG. 2 is a block diagram of an inventory management system, FIG. 3 is a flowchart of a sticker issuing routine, FIG. 4A and FIG. 4B are diagrams showing a shipping sticker and a warehousing sticker, FIG. 5 is a flowchart of a normal inventory period calculation routine, FIG. 6 is a diagram showing a method for discriminating between normal inventory and managed inventory, FIG. 7 is a flowchart of a product allocation routine, and FIG. 8 to FIG. 12 are time charts of first to fifth examples of the product allocation.

### BEST MODE FOR CARRYING OUT THE INVENTION

A mode for carrying out the present invention is explained below by reference to an embodiment of the present invention shown in the attached drawings.

FIG. 1 to FIG. 12 show one embodiment of the present invention.

As shown in FIG. 1, motorcycles (the product of the present invention) produced in a factory receive a completion inspection at an inspection site, a sticker showing an allocation destination is affixed to a motorcycle that has passed the completion inspection, and the motorcycle is then loaded on a truck and sent to a warehouse (the inventory section of the present invention) or a sales company, or a motorcycle stored in the warehouse is loaded on a truck and sent to a sales company.

As shown in FIG. 2, an inventory management system of this embodiment includes a receiving management section 11 for receiving a motorcycle coming from a factory production line, an inventory section 12 for temporarily storing a motorcycle that has come out of the receiving management section 11, and a shipping management section 13 for shipping a motorcycle that has come out of the receiving management section 11 or the inventory section 12 to a sales company. Allocation determination means 14 connected to the receiving management section 11 determines whether a motorcycle that has passed the completion inspection is sent to the inventory section 12 or the shipping management section 13.

That is, in step S1 of the flowchart of FIG. 3 the allocation determination means 14 receives data for a motorcycle that has passed the completion inspection; if in step S2 it is determined that the motorcycle is to be sent to the shipping management section 13, then in step S3 a shipping sticker is issued by an automatic sticker issuing machine, whereas if in step S2 it is determined that the motorcycle is not to be sent to the shipping management section 13, that is, it is to be sent to the inventory section 12, then in step S4 a warehousing sticker is issued by the automatic sticker issuing machine.

The shipping sticker shown in FIG. 4A is affixed to a motorcycle that is sent directly from the receiving management section 11 to the shipping management section 13, and information about MTC (model, type, color), frame number, vehicle delivery destination (sales company name), scheduled shipping date, order number, etc. is printed on the shipping sticker. The warehousing sticker shown in FIG. 4B is affixed to a motorcycle that is temporarily stored in the inventory section 12 before being sent to the shipping management section 13, and information about MTC (model, type, color), frame number, vehicle delivery destination (inventory section name), completion inspection pass date, etc. is printed on the warehousing sticker.

An explanation is given below centered on a specific method for allocation determination carried out by the allocation determination means 14.

Referring back to FIG. 2, connected to the receiving management section 11 and the allocation determination means 14 is production line data inputting means 15, to which are connected product information storage means 16, quantity storage means 17, and completion inspection pass date storage means 18, in which are stored respectively product information such as model, type, color, and frame number of a motorcycle that has passed the completion inspection, a quantity thereof, and a completion inspection pass date. Inputted into shipping request data inputting means 19 connected to the allocation determination means 14 are a designated delivery date stored in designated delivery date storage means 20, a delivery volume stored in delivery volume storage means 21, a delivery destination stored in delivery destination storage means 22, and the product information stored in the product information storage means 16. Connected to production plan storage means 23 connected to the allocation determination means 14 are production-to-order plan storage means 24 for storing a production-to-order plan, and production-without-orders plan storage means 25 for storing a production-without-orders plan.

Connected to inventory management means 26 connected to the inventory section 12 and the allocation determination means 14 is inventory information storage means 27. Connected to the inventory information storage means 27 are the product information storage means 16, the completion inspection pass date storage means 18, normal inventory storage means 28, and managed inventory storage means 29. It is necessary for a motorcycle that has passed the completion inspection to be sold within 9 months from the pass date, which is a shipping-allowed period, and it is necessary for a motorcycle that cannot be sold within the shipping-allowed period to be subjected to the inspection again before sale. Therefore, a motorcycle is determined as being normal inventory if it is estimated that it can definitely be sold within 6 months, which is obtained by subtracting an allowance period of 3 months from the shipping-allowed period of 9 months, and a motorcycle that is estimated to have a possibility that it might not be sold within 6 months is determined as being managed inventory and is sent preferentially to the shipping management section 13.

Because of this, connected to the inventory management means 26 are basic inventory period calculation means 30 and normal inventory period calculation means 31, and connected to the basic inventory period calculation means 30 is periodic sales volume storage means 32 for storing the actual record of sales volume of motorcycles per predetermined period (for example, one month).

A method for discriminating, by means of the inventory management means 26, between the normal inventory and the managed inventory is now explained.

In the flowchart of FIG. 5, firstly in step S11 the model, the type, and the color of a motorcycle are specified, in step S12 the actual record of monthly sales volume of the corresponding motorcycle is checked on the basis of the information stored in the periodic sales volume storage means 32, and in step S13 the inventory quantity of the corresponding motorcycle in the inventory section 12 is checked on the basis of the information stored in the inventory information storage means 27. Subsequently, in step S14 the basic inventory period calculation means 30 calculates a basic inventory period by dividing the total inventory quantity by the monthly sales volume, and in step S15 the normal inventory period calculation means 31 calculates a normal inventory period by dividing the basic inventory period from 6 months, which is a predetermined number of months. In step S16, if the normal inventory period exceeds 6 months, it is limited to 6 months, which is an upper limit. The predetermined number of months, that is, 6 months, corresponds to the difference obtained by subtracting an allowance period of 3 months from a shipping-allowed period of 9 months.

**[Table 1]**

| | Example 1 | Example 2 | Example 3 |
|---|---|---|---|
| Inventory quantity | 600 | 600 | 600 |
| Monthly sales volume | 400 | 100 | 150 |
| Basic inventory period | 1.5 months | 6 months | 4 months |
| Normal inventory period | 4.5 months | 0 months | 2 months |

As shown in Table 1, in Example 1 since the inventory quantity is 600 and the monthly sales volume is 400, the basic inventory period is 1.5 months, and the normal inventory period is 6 months - 1.5 months = 4.5 months. In Example 2, since the inventory quantity is 600 and the monthly sales volume is 100, the basic inventory period is 6 months, and the normal inventory period is 6 months - 6 months = 0 months. In Example 3, since the inventory quantity is 600 and the monthly sales volume is 150, the basic inventory period is 4 months, and the normal inventory period is 6 months - 4 months = 2 months.

In FIG. 6, as inventory as of 2002/10/19, 600 motorcycles whose completion inspection pass date is from 2002/4/1 to 2002/10/18 are denoted by inventory management numbers. If the normal inventory period is 4.5 months as in Example 1, inventory management numbers F-6 to F-600, for which the completion inspection has been finished during a period from the present to 4.5 months ago, are normal inventory, and inventory management numbers F-1 to F-5, for which it has been finished prior thereto, are managed inventory. If the normal inventory period is 0 months as in Example 2, all of the inventory management numbers F-1 to F-600 are managed inventory. If the normal inventory period is 2 months as in Example 3, inventory management numbers F-259 to F-600, for which the completion inspection has been finished during a period from the present to 2 months ago, are normal inventory, and inventory management numbers F-1 to F-258, for which it has been finished prior thereto, are managed inventory.

In this way, when the inventory quantity is large and the monthly sales volume is small, that is, the possibility that the inventory might not be sold after 6 months has passed is high, the managed inventory increases, whereas when the inventory quantity is small and the monthly sales volume is large, that is, the possibility that the inventory might not be sold after 6 months has passed is low, the managed inventory decreases, and the normal inventory and the managed inventory can therefore be set appropriately.

As hereinbefore described, when all of the motorcycles stored in the inventory section 12 are classified into normal inventory and managed inventory, the allocation determination means 14 allocates motorcycles received by the receiving management section 11 between those that are to be sent to the inventory section 12 and those that are to be sent to the shipping management section 13, and determines whether or not a motorcycle stored in the inventory section 12 is sent to the shipping management section 13. This operation is explained below by reference to the flowchart of FIG. 7 and the time charts of FIG. 8 to FIG. 12.

The time chart of FIG. 8 corresponds to steps S21 to S25 of the flowchart of FIG. 7; if in step S21 a sales company orders a motorcycle as 'product A', then in step S22 it is determined whether or not there is a production-without-orders plan for the corresponding motorcycle before a designated vehicle delivery date. When delivering a motorcycle to a customer via the sales company, since a few days lead time for transport and pre-delivery inspection are necessary, in practice it is determined whether or not there is a production-without-orders plan prior to a date that is earlier than the designated vehicle delivery date by the lead time. If in step S22 there is a production-without-orders plan prior to the designated vehicle delivery date, and in step S23 there is managed inventory, then in step S24 a shipping sticker is issued in the inventory section 12, this shipping sticker is affixed to a motorcycle of the managed inventory, the motorcycle is shipped, a newly completed motorcycle is sent from the receiving management section 11 to the inventory section 12, and in step S25 the inventory information stored in the inventory information storage means 27 is updated.

In FIG. 8, it is assumed that, among an original 50 motorcycles in the inventory section 12, 24 motorcycles are managed inventory, and 26 motorcycles are normal inventory, and since the managed inventory quantity decreases by one due to the above-mentioned shipping, the managed inventory quantity decreases from 24 to 23. Furthermore, since a newly completed motorcycle is sent to the inventory section 12 and, becomes normal inventory, the normal inventory quantity increases from 26 to 27.

In this way, even if a newly completed motorcycle that is produced without an order is in time for the designated vehicle delivery date, when there is managed inventory in the inventory section 12, a motorcycle of the managed inventory is shipped, the newly completed motorcycle is stored in the inventory section 12, and it is thereby possible to preferentially decrease the managed inventory and prevent the occurrence of a motorcycle whose sale-allowed period has expired.

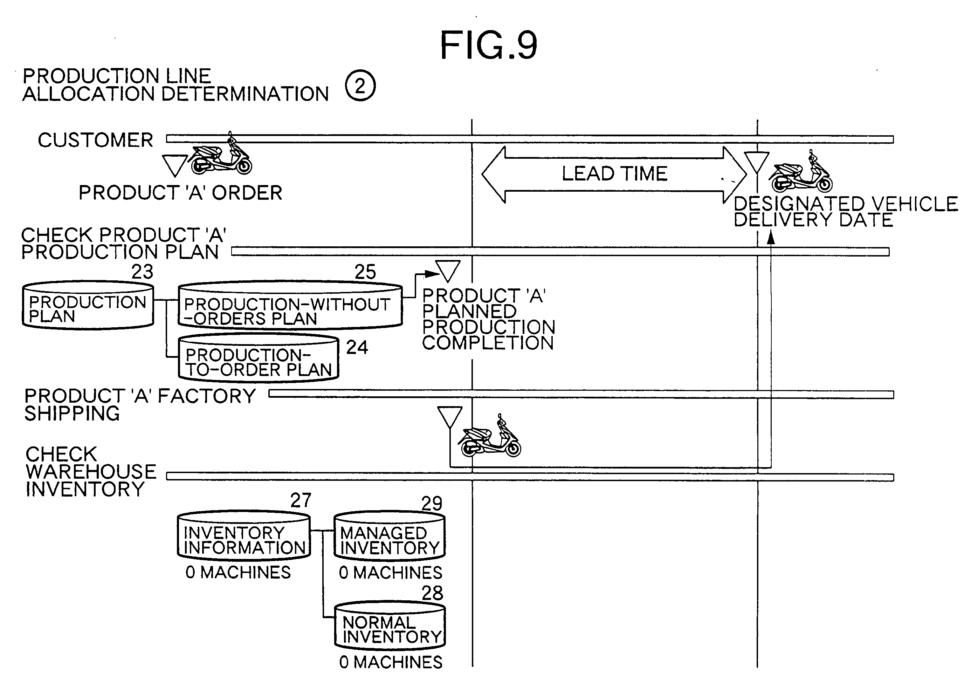

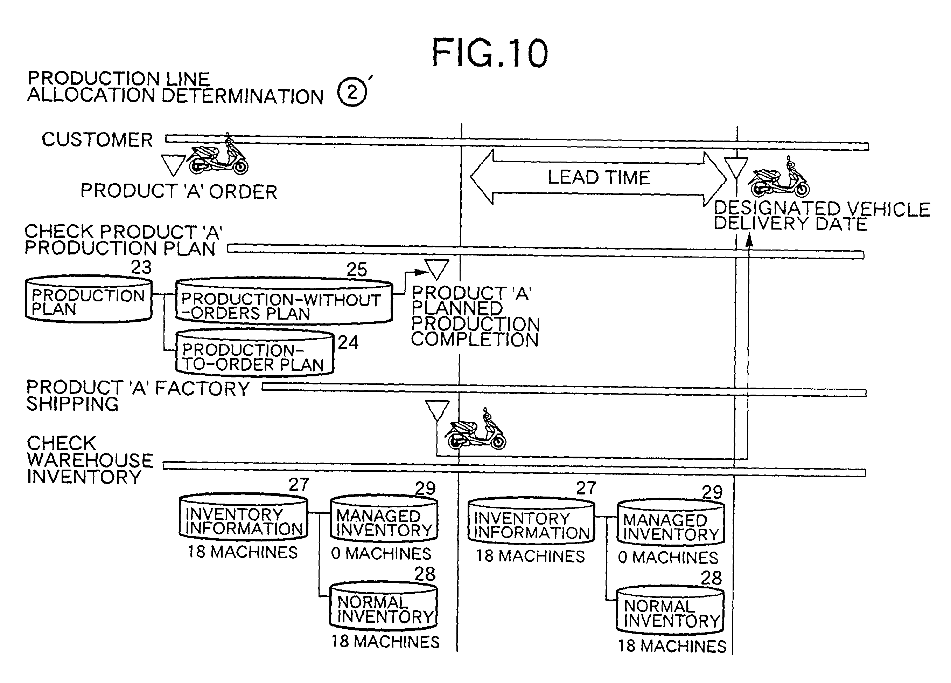

The time charts of FIG. 9 and FIG. 10 correspond to steps S21 to S23, S26, and S27 of the flowchart of FIG. 7; if in step S22 there is a production-without-orders plan for the corresponding motorcycle prior to the designated vehicle delivery date and in step S23 there is no managed inventory, then in step S26 an order number is added to a shipping sticker issued by the receiving management section 11, and in step S27 among production plans for the corresponding date, the production-without-orders plan stored in the production-without-orders plan storage means 25 is decreased by one, the production-to-order plan stored in the production-to-order plan storage means 24 is increased by one, the shipping sticker is affixed to a newly completed motorcycle, and the motorcycle is sent to the shipping management section 13.

Even if the original warehouse inventory quantity shown in FIG. 9 is 0, or all of the original warehouse inventory quantity of 18 machines shown in FIG. 10 are normal inventory, the warehouse inventory quantity is not changed by the above-mentioned shipping.

In this way, when a newly completed motorcycle produced without an order is in time for the designated vehicle delivery date, if there is no managed inventory in the inventory section 12, the newly completed motorcycle is sent directly to the shipping management section 13, thus making it unnecessary to load and unload the motorcycle on a truck for sending it to the inventory section 12 and transport it by the truck, and thereby reducing the cost.

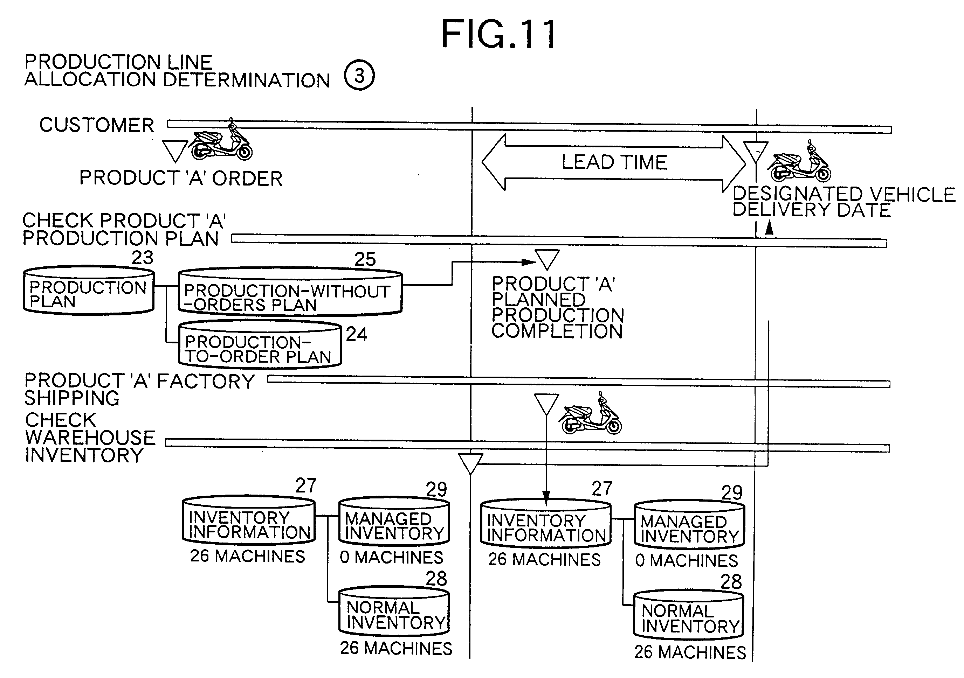

The time chart of FIG. 11 corresponds to steps S21, S22, and S28 to S30 of the flowchart of FIG. 7; if in step S22 there is no production-without-orders plan prior to the designated vehicle delivery date, and in step S28 there is warehouse inventory, then in step S29 a shipping sticker is issued in the inventory section 12, this shipping sticker is affixed to the oldest motorcycle among the motorcycles stored in the inventory section 12, the motorcycle is sent to the shipping management section 13, and in step S30 the inventory information stored in the inventory information storage means 27 is updated. If all 26 motorcycles in the inventory section 12 were originally normal inventory, the normal inventory quantity will decrease to 25 as a result of the above-mentioned shipping, but when a subsequently completed motorcycle produced without an order is sent to the inventory section 12 the normal inventory quantity returns to 26.

In the example of FIG. 11, all of the warehouse inventory is normal inventory, but when the warehouse inventory is managed inventory, the same applies. When the warehouse inventory includes both normal inventory and managed inventory, the oldest managed inventory is shipped preferentially.

In this way, when a newly completed motorcycle is not in time for the designated vehicle delivery date, a motorcycle stored in the inventory section 12 is sent to the shipping management section 13, and the request by the customer can thus be satisfied by meeting the designated vehicle delivery date.

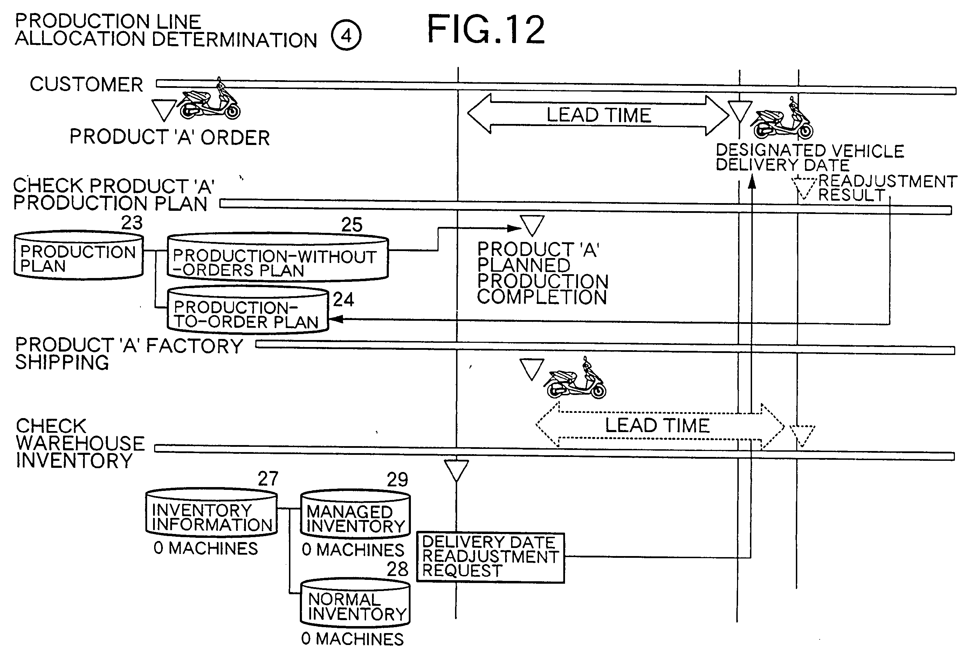

The time chart of FIG. 12 corresponds to steps S21, S22, S28, and S31 of the flowchart of FIG. 7; if in step S22 there is no production-without-orders plan prior to the designated vehicle delivery date, and in step S28 there is no warehouse inventory, then in step S31 the order is put on back order. In this case, a date obtained by adding a lead time to a date when a motorcycle with a production-without-orders plan is to be completed is set as a scheduled vehicle delivery date after readjustment, and the production-to-order plan stored in the production-to-order plan storage means 24 is updated based on the new scheduled vehicle delivery date.

Although an embodiment of the present invention is explained above, the present invention can be modified in a variety of ways as long as the spirit and scope thereof are maintained.

For example, in the embodiment a motorcycle is illustrated as the product, but the product of the present invention is not limited to the motorcycle.

## Claims

1. A product inventory management system comprising:
a receiving management section (11) for carrying out receiving management of a product coming from a factory production line;
an inventory section (12) for stocking the product; and
a shipping management section (13) for carrying out shipping management of the product, **characterized in that** the system further comprises;
inventory information storage means (27) for storing inventory information including a product inventory quantity in the inventory section (12); and
allocation determination means (14) for determining, based on the product inventory quantity stored in the inventory information storage means (27), whether a product received by the receiving management section (11) is moved to the inventory section (12) or the shipping management section (13).

2. The product inventory management system according to Claim 1, wherein the system further comprises:
production plan storage means (23) for storing a production plan including a production-to-order plan where the delivery destination has already been determined and a production-without-orders plan where the delivery destination has not yet been determined; and
designated delivery date storage means (20) for storing a designated product delivery date;
the allocation determination means (14) determining, based on the inventory quantity, the production plan, and the designated delivery date, whether a product received by the receiving management section (11) is moved to the inventory section (12) or to the shipping management section (13) and whether or not a product stored in the inventory section (12) is moved to the shipping management section (13).

3. The product inventory management system according to Claim 2, wherein the system further comprises:
periodic sales volume storage means (32) for storing the sales volume of the product over a period of time;
basic inventory period calculation means (30) for calculating, based on the inventory quantity and the sales volume, a basic inventory period for which the product is predicted to be stocked;
normal inventory period calculation means (31) for calculating a normal inventory period by subtracting the basic inventory period from a preset predetermined period; and
inventory management means (26) for managing the product moved from the receiving management section (11) to the inventory section (12) as normal inventory during the normal inventory period, and managing the product as managed inventory after the normal inventory period has elapsed.

4. The product inventory management system according to Claim 3, wherein,
if there is managed inventory, the allocation determination means (14) directs the managed inventory to be moved to the shipping management section (13) regardless of whether or not there is a production-without-orders plan and regardless of whether or not there is normal inventory,
if there is no managed inventory and there is a production-without-orders plan for the product that will be completed prior to the designated delivery date, the allocation determination means (14) directs the completed product to be moved to the shipping management section (13) by designating the production plan for the product as the production-to-order plan, and
if there is no production-without-orders plan for the product that will be completed prior to the designated delivery date, the allocation determination means (14) directs the normal inventory to be moved to the shipping management section (13).
